Europäisches Patentamt

European Patent Office

Office européen des brevets

(11) Veröffentlichungsnummer: **0 387 508**
**A2**

## (12) EUROPÄISCHE PATENTANMELDUNG

(21) Anmeldenummer: **90101633.7**

(51) Int. Cl.⁵: **B29C 35/06, B29C 47/88**

(22) Anmeldetag: **27.01.90**

(30) Priorität: **16.03.89 DE 3908533**

(43) Veröffentlichungstag der Anmeldung:
**19.09.90 Patentblatt 90/38**

(84) Benannte Vertragsstaaten:
**AT BE CH DE DK ES FR GB GR IT LI NL SE**

(71) Anmelder: **SIKORA INDUSTRIEELEKTRONIK GMBH**
**Bruchweide 2**
**D-2800 Bremen 44(DE)**

(72) Erfinder: **Sikora, Harald**
**Griesborner Strasse 37**
**D-2800 Bremen 44(DE)**

(74) Vertreter: **Dipl.-Ing. H. Hauck Dipl.-Ing. E. Graalfs Dipl.-Ing. W. Wehnert Dr.-Ing. W. Döring**
**Neuer Wall 41**
**D-2000 Hamburg 36(DE)**

(54) **Vorrichtung zum Vulkanisieren oder Vernetzen eines Stranges, insbesondere eines mit einem Kunststoffüberzug versehenen Kabels.**

(57) Vorrichtung zum Vulkanisieren oder Vernetzen eines Stranges, insbesondere eines mit einem Kunststoffüberzug versehenen Kabels, mit einem langgestreckten Rohrgehäuse, an dessen oberem Ende der Strang eingeführt wird und dessen oberer Abschnitt als Erhitzungszone und dessen unterer Abschnitt als Kühlzone ausgebildet ist, wobei zumindest die Erhitzungszone einen Einlaß für ein Schutzgas aufweist, und einer Schauglasarmatur, die nahe dem oberen Ende seitlich am Rohrgehäuse angebracht ist zur Betrachtung bzw. Durchmessermessung des Stranges mittels eines geeigneten optisch-elektrischen Meßgerätes über ein Schauglas, wobei dem der Schauglasarmatur zugeordneten oberen Bereich der Heizzone des Rohrgehäuses eine sepa-rate Heizvorrichtung zugeordnet ist, die die Atmosphäre im oberen Bereich permanent auf eine Temperatur erwärmt, die höher als in den übrigen Berei-chen der Heizzone ist.

FIG.1

EP 0 387 508 A2

# Vorrichtung zum Vulkanisieren oder Vernetzen eines Stranges, insbesondere eines mit einem Kunststoffüberzug versehenen Kabels

Die Erfindung bezieht sich auf eine Vorrichtung zum Vulkanisieren oder Vernetzen eines Stranges, insbesondere eines mit einem Kunststoffüberzug versehenen Kabels nach dem Oberbegriff des Patentanspruchs 1.

Vorrichtungen zum Vulkanisieren oder Vernetzen eines Stranges sind etwa aus der DE-OS 28 26 857 oder der EP 0 099 993 bekanntgeworden. Üblicherweise wird zum Beispiel bei Kabeln der Leiter in einem Extruder mit einem Kunststoffmantel versehen, der anschließend in ein rohrartiges Gehäuse eingeführt wird, wo die Trockenvernetzung bzw. Vulkanisierung stattfindet. Das rohrartige Gehäuse ist in eine Heiz- und Kühlzone unterteilt. Die Heizzone (Vernetzungsstrecke) kann in einzelne Unterzonen unterteilt werden, die eine unterschiedliche Temperatur erhalten (Temperaturprofil). Die Heizzone ist üblicherweise mit einem Schutzgas gefüllt, zum Beispiel Stickstoff oder Dampf. Aus der EP 0 099 993 ist ferner bekanntgeworden, eine sogenannte Schauglasarmatur seitlich am Rohrgehäuse anzuordnen. Zu diesem Zweck wird im oberen Bereich der zwischen dem Extruder und der Vernetzungsstrecke im sogenannten Teleskoprohrteil ein Querrohr angeflanscht. Am freien Ende des Querrohrs ist ein Schauglas aus einer geeigneten Glaszusammensetzung angebracht und über das zum Beispiel mit Hilfe eines optischen Meßgerätes der Durchmesser des Stranges gemessen werden kann. In diesem Zusammenhang ist ferner bekannt, im Rohrgehäuse außerdem eine Infrarotquelle anzuordnen, die eine ausreichende Hintergrundhelligkeit gibt, damit mit Hilfe von Diodenzeilen oder dergleichen eine genaue Durchmesserprüfung vorgenommen werden kann.

Bei der Vulkanisierung oder dem Vernetzen werden Spaltprodukte frei, die sich in der Atmosphäre im Gehäuseinneren bewegen und aufgrund des Temperaturgradienten auch in den oberen Bereich der Heizzone wandern. Der obere Bereich der Heizzone, die als Teleskoprohr ausgebildet ist, ist normalerweise nicht wärmeisoliert, während im Anschluß daran das Rohr von einer geeigneten Wärmeisolierung umgeben ist. Da das Teleskoprohr wegen fehlender Beheizung und fehlender Wärmeisolierung das Schutzgas besonders stark abkühlt, findet ein ständiger Schutzgasaustausch statt, weil das abgekühlte Schutzgas absinkt, während das heißere Schutzgas aus der Vernetzungsstrecke einschließlich der darin gelösten Spaltprodukte in den oberen Teil der Anlage, also in das Teleskoprohr aufsteigt.Die Spaltprodukte haben daher die Neigung, insbesondere in den oberen Bereich zu wandern, wo sie innerhalb rascher Zeit zu einer Verschmutzung des Schauglases und auch der Infrarotquelle führen. Die Verschmutzung der Infrarotquelle vermindert deren Helligkeit.Die Verschmutzung des Schauglases beeinträchtigt die präzise Messung des Durchmessers. Bei Verwendung von Dampf besteht außerdem die Gefahr, daß sich im oberen Bereich der Heizzone Nebel bildet, der eine Durchmesser-Vermessung unmöglich macht.

Aus der bereits mehrfach erwähnten EP 0 099 993 ist ferner bekanntgeworden, in das das Schauglas haltende Rohr Stickstoff einzutragen, der unter einem größeren Druck steht als der Druck in der Heizzone. Das Stickstoffgas soll ver hindern, daß verschmutzte Teilchen überhaupt zum Schauglas gelangen. Bei der bekannten Vorrichtung soll die Temperatur des Stickstoffgases niedriger sein als in der Heizzone. Es hat sich indessen herausgestellt, daß auch mit dieser Vorkehrung die Verschmutzung des Schauglases nicht vollständig vermieden werden kann. Auf die Verschmutzung der Infrarotquelle hat diese Maßnahme keinen Einfluß.

Der Erfindung liegt die Aufgabe zugrunde, eine Vorrichtung zum Vulkanisieren oder Vernetzen eines Stranges, insbesondere eines mit einem Kunststoffüberzug versehenen Kabels zu schaffen, die verhindert, daß die Schauglasarmatur verschmutzende Partikel nicht in den oberen Bereich des Rohrgehäuses gelangen, wobei im oberen Bereich auch eine Nebelbildung bei Verwendung von Dampf als Schutzgas vermieden wird.

Diese Aufgabe wird gelöst durch die Merkmale des Kennzeichnungsteils des Patentanspruchs 1.

Bei der erfindungsgemäßen Vorrichtung ist im oberen Bereich der Vernetzungsstrecke eine separate Heizvorrichtung vorgesehen, die dafür sorgt, daß die Atmosphäre permanent auf eine Temperatur erwärmt wird, die höher ist als in den übrigen Bereichen der Vernetzungsstrecke. Es hat sich über raschend herausgestellt, daß auf diese Weise verhindert wird, daß überhaupt Schmutzpartikel in nennenswertem Ausmaß in den oberen Bereich der Heizzone gelangen. Die Verschmutzung der Schauglasarmatur ist somit stark reduziert. Da der Meßbereich im oberen Teil des Teleskoprohres relativ schmal ist, braucht auch der warme Bereich nur relativ klein zu sein, so daß bereits eine relativ geringe Heizleistung ausreicht, für die ausreichende Temperatur zu sorgen. Eine Heizleistung von einem Kilowatt oder weniger kann bereits völlig ausreichend sein.

Wie bereits erwähnt, ist es bekannt, eine Infrarotquelle auf der dem Schauglas gegenüberliegenden Seite im Rohrgehäuse anzuordnen, um eine ausreichende gleichmäßige Hintergrundhelligkeit zu Meßzwecken zu erzeugen.Nach einer Ausgestaltung der Erfindung kann die Heizvorrichtung von der IR-Quelle gebildet werden, insbesondere von einem Glühstrang, der sich über einen Teil des Umfangs des Rohrs erstreckt. Für die Durchführung der Messung würden wenige Watt ausreichen, um eine ausreichende Hintergrundhelligkeit zu erzeugen. Wird indessen der Glühstrang auf hohe Leistung ausgelegt, beispielsweise 1 kW, kann er gleichzeitig das Schutzgas im Bereich der Messung auf die gewünschte Temperatur erwärmen.

Zur Verhinderung von Nebel oder einer Verschmutzung der Schauglasarmatur kann auch beitragen, wenn das in die Schauglasarmatur eingetragene Schutzgas ebenfalls so hoch erwärmt wird, daß es beim Eintritt in den oberen Bereich der Heizzone steigt und dort möglichst lange verharrt.

Mit Hilfe der erfindungsgemäßen Vorrichtung ist es möglich, ein Schauglas über einen längeren Zeitraum so sauber zu halten, daß eine einwandfreie Messung gewährleistet ist. Das gleiche gilt für die Infrarotquelle, die ebenfalls keine Verschmutzung erleidet.

Die Erfindung wird nachfolgend anhand von Zeichnungen näher erläutert.

Fig. 1 zeigt äußerst schematisch eine Vorrichtung nach der Erfindung.

Fig. 2 zeigt ebenfalls schematisch eine Schauglasarmatur in der Vorrichtung nach der Erfindung.

Ein elektrischer Leiter 10 wird in einem Extruder 11 mit einem Kunststoffmantel beschichtet. Der ummantelte Strang 12 wird in ein Rohrgehäuse 13 eingeleitet, in dem eine Vernetzung in bekannter Weise stattfindet. Wie zu erkennen, ist der dem Extruder 11 benachbarte Abschnitt 14 des Rohrgehäuses 13 unisoliert, während der sich anschließende Abschnitt 15 eine Isolierung aufweist. Die gezeigten Abschnitte bilden Teile einer Heizzone, die durch geeignete Heizvorrichtungen (nicht gezeigt) erwärmt wird. Schutzgas, beispielsweise Stickstoff oder Wasserdampf,wird über einen geeigneten nicht gezeigten Anschluß eingetragen und strömt in Richtung Pfeil 16.

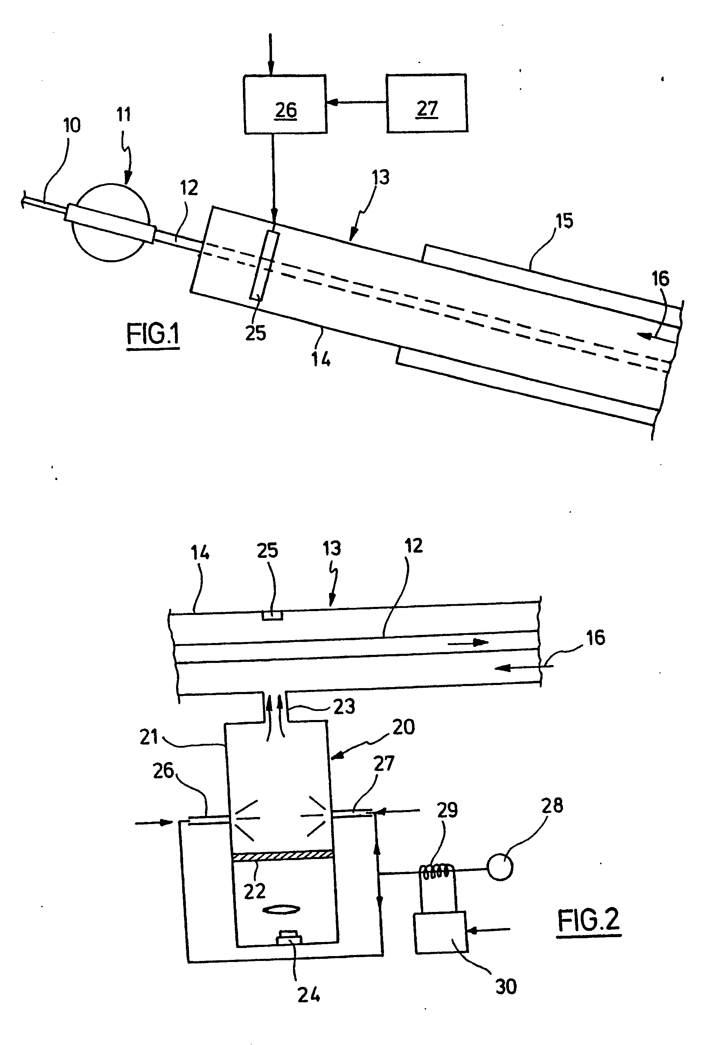

Aus Fig. 2 ist zu erkennen, daß an den Abschnitt 14 eine Schauglasarmatur 20 seitlich angebracht ist. Sie weist ein Gehäuse 21 auf, das ein Schauglas 22 enthält. Das Gehäuse 21 ist über einen Anschlußrohrstutzen 23 mit dem Rohrabschnitt 14 verbunden. Auf der dem Rohrstutzen abgewandten Seite des Gehäuses 21 ist eine optische Meßvorrichtung 24 angeordnet, über die der Durchmesser des Stranges 12 gemessen wird. Dem Rohrstutzen 23 gegenüberliegend ist ein Heizstrang 25 im Rohrabschnitt 15 angeordnet, der sich, wie aus Fig. 1 hervorgeht, um einen Teil des Umfangs des Rohrabschnitts 14 erstreckt. Der Heizstrang wird durch eine Heizquelle 26 elektrisch beheizt, die mittels einer Steuervorrichtung 27 gesteuert wird. Die Steuervorrichtung 27 sorgt dafür,daß ein Strom einer Mindeststärke durch den Heizstrang 25 geschickt wird. Der Heizstrang dient dazu, die Atmosphäre in seinem Bereich, d.h. im Meßbereich, auf eine Temperatur zu erwärmen, die höher ist als die Temperatur in der übrigen Heizzone. Dadurch entsteht ein Wärmegefälle von oben nach unten, das verhindert, daß Schmutzteilchen, die insbesondere auf Spaltprodukte zurückgehen, in den Meßbereich gelangen und die Schauglasarmatur 20 bzw. das Schauglas 22 verschmutzen. Auch eine Verschmutzung des Heizstrangs 25, der gleichzeitig für eine ausreichende Hintergrundhelligkeit für das Meßgerät 24 sorgt, wird vermieden. Bei Dampfatmosphäre wird durch diese Maßnahme die Nebelbildung im Meßbereich vermieden.

Das Gehäuse 21 weist zwei Anschlüsse 26, 27 für ein Schutzgas auf, beispielsweise Stickstoff oder Dampf, das von einer geeigneten Quelle 28 unter Druck in das Innere des Gehäuses 21 eingebracht wird. Eine Heizwendel 29 umgibt einen Leitungsabschnitt zu den Anschlüssen 26, 27; sie wird von einer elektrischen Heizvorrichtung gesteuert. Dadurch wird das Schutzgas auf eine Temperatur gebracht, die in jedem Fall so hoch ist, daß das Schutzgas bei seinem Austritt aus dem Gehäuse 21 in den Rohrabschnitt 14 die Atmosphäre im Meßbereich nicht abkühlt bzw. den oben genannten Effekt der Aufheizung des Meßbereichs unterstützt.

## Ansprüche

1. Vorrichtung zum Vulkanisieren oder Vernetzen eines Stranges, insbesondere eines mit einem Kunststoffüberzug versehenen Kabels, mit einem langgestreckten Rohrgehäuse, an dessen oberem Ende der Strang eingeführt wird und dessen oberer Abschnitt als Erhitzungszone und dessen unterer Abschnitt als Kühlzone ausgebildet ist, wobei zumindest die Erhitzungszone einen Einlaß für ein Schutzgas aufweist, und einer Schauglasarmatur, die nahe dem oberen Ende seitlich am Rohrgehäuse angebracht ist zur Betrachtung bzw. Durchmessermessung des Stranges mittels eines geeigneten optisch-elektrischen Meßgerätes über ein Schauglas, dadurch gekennzeichnet, daß dem der Schauglasarmatur (20) zugeordneten oberen Bereich der Heizzone (14) des Rohrgehäuses (13) eine separate Heizvorrichtung (25) zugeordnet ist, die die Atmosphäre im oberen Bereich permanent auf eine Temperatur erwärmt, die höher als in den übrigen Bereichen der Heizzone (14) ist.

2. Vorrichtung nach Anspruch 1, bei der auf der dem Schauglas gegenüberliegenden Seite eine Infrarotquelle im Rohrgehäuse angeordnet ist, dadurch gekennzeichnet, daß die Heizvorrichtung von der Infrarotquelle gebildet ist, insbesondere von einem Glühstrang (25).

3. Vorrichtung nach Anspruch 1 oder 2, bei der die Schauglasarmatur einen Anschluß für Schutzgas aufweist, dadurch gekennzeichnet, daß die Temperatur des in die Schauglasarmatur (20) eingeleiteten Schutzgases so hoch ist, daß sie den oberen Bereich im Rohrgehäuse (14) und die Atmosphäre auf eine Temperatur erwärmt, die höher als in den übrigen Bereichen der Heizzone ist.

FIG.1

FIG.2